# EUROPEAN PATENT APPLICATION

(11) **EP 2 975 549 A1**
(43) Date of publication of application: **20.01.2016**
(21) Application number: 14177106.3
(22) Date of filing: 15.07.2014
(51) Int. Cl.: G06F 21/75, G06F 21/52, G06F 21/54, G06F 21/77, G06F 21/55, G06F 21/14

(54) **Method and device to protect software code against fault attack**

(71) Applicant: Nagravision S.A., 1033 Cheseaux-sur-Lausanne (CH)
(72) Inventor: Bellocchio, Marc, 13400 Aubagne (FR)
(74) Representative: Leman Consulting S.A.

(57) **Abstract**

The present invention relates to the domain of software protection and more particularly to a device and a method for rendering software tamper-proof, thus ensuring the dynamic integrity of a piece of software.

It is proposed a method to produce a software code protected against fault attack executed in a microprocessor, said code comprising at least a first and a second function, each of which comprising a set of instructions, characterized in that, the set instructions of the first and the second function is divided into subsets of instructions, the subsets of the first function being interleaved with the subsets of the second function resulting in a fourth function such that the execution instructions of the first and second function is carried out in an alternate manner.

## Description

### INTRODUCTION

The present invention relates to the domain of software protection and more particularly to a device and a means for rendering software tamper-proof, thus ensuring the dynamic integrity of a piece of software.

### STATE OF THE ART

In the domain of secure data processing, it is necessary to provide a tamper-resistant environment within which the processing can occur in a secure manner. A first approach to tackling the problem of application security was focused on endeavoring to render the hardware within which the software was housed as secure as possible. The notion of tamper-proof generally means that such hardware was difficult to open or once opened would destroy the chip on which the secure software resided. However, nowadays it is generally recognized that software techniques for achieving security application offer more flexibility and lower cost and indeed in most cases where high security applications are required, i.e. that a piece of software has not been tampered with, a combination of software and hardware approaches is used.

A typical system on which an application runs generally comprises a processing unit, a plurality of peripherals and memories. In most cases where security is required, encryption schemes are used. In such schemes, information which is required to be kept secure, i.e. working data or executable code, is encrypted. Encryption is usually done within a security module, which forms part of the system. The security module can be implemented in a variety of manners such as on a microprocessor card, on a smartcard or any variety of electronic modules having a variety of forms. These modules are generally portable and detachable from the receiver and are designed to be tamper-proof. The most commonly used form has electrical contacts (ISO 7816), but contactless versions of type ISO 14443 also exist. Another implementation of the security module exists where it is directly soldered inside the receiver, a variation of this being a circuit on a socket or connector such as a SIM module. Yet another implementation is to have the security module integrated on a chip which has another function e.g. on a de-scrambling module or on a microprocessor module of a decoder. The security module can also be implemented in software.

In spite of the use of security modules and advanced encryption techniques in modern day secure processing systems, such systems still represent a significant attraction for attempts at breaching security. Techniques which have been used to breach the security of such systems include, for example, the reverse engineering of the hardware involved or the dynamic or static analysis of software used therein and the subsequent tampering with such software. By static analysis it is meant some form of disassembly or decompilation of non-executing code. By dynamic analysis it is meant analysing while the code is running, i.e. by observing certain signals while the software is running. Such analyses may lead to tampering whereby the software is modified by, for example, performing a branch-jamming attack wherein an unconditional jump is introduced in place of a conditional jump thus forcing a branch to execute when the current conditions do not prescribe such execution. Typically, such an attack would force a program to bypass an authentication step like serial number or password checking for example. This is possible by a different attack such as voltage, clock or laser glitching. The first example refers to the voltage (or VCC) glitching. In this case, we typically run the chip at its nominal voltage (say 3.3V), and whenever we want to inject a fault, we drop the voltage down to e.g. 1V. Clock glitching is similar to VCC glitching in the sense that it affects another critical parameter of the chip that can be controlled by the attacker. In this case, what we do is to inject spurious clock cycles that are way shorter than the original clock cycle. After clock and VCC glitching, we move to the real king of current fault injection attacks. Optical fault injection, or most commonly Laser fault injection, uses a light beam to inject faults into semiconductor devices. Given enough energy, electrons that would otherwise be still within the semiconductor will start to move, creating a current. So, for our chips, this means that some of the transistors in the chip will actually switch when they should not.

In a paper entitled "Tamper-Resistance for Software Protection", submitted in 2005 as a thesis for a degree of Master of Science, Ping Wang describes a technique of multi block encryption, wherein a software program is divided into a number of independent blocks according to the flow of the program. Each block of the program is then encrypted, each block having a different encryption key. The encryption key for each block is the hash value of the preceding block according to the flow of the program. This technique works in programs which have a tree-like structure wherein the blocks are arranged in a hierarchical fashion with one block leading to another. In this technique, the first block to be executed must be in clear form. A code to call the decryption routine is placed inside each of the blocks and a program controller to implement the dynamic integrity checking is added to the end of the program. If an adversary tries to change a part of the program, then the hash value for the block containing the changed part of the program will be different and so the next block will not be properly decrypted and the program crashes.

This scheme has the disadvantage that each block is encrypted and therefore needs to be read twice. It has a further disadvantage in that the encryption is done on a block by block basis rather than an instruction by instruction basis, with one decryption key being valid for an entire block. This means that the discovery of one key leaves a complete block of software vulnerable. The size of the smallest possible block is determined by the smallest block completely containing a loop, since in this design, by definition, a block must contain the entirety of a loop. Even if a program were able to be reduced to one instruction per block in the case that there were no loops, the resulting overhead in implementing the method would render the final result unwieldy in terms of size and speed of execution. Furthermore, one could imagine a possible attack wherein a modification could be made to a block and a corresponding change made to the program controller to compensate for the modification in such a way that it calculates the proper hash value with respect to the modification made to the block thereby preserving the perceived integrity of the program.

Another solution was proposed in the document WO2010/142622 describing a solution in which an encrypted key and a reference data are sent to the device in charge of the security operations. This device comprises a monitoring module which analyses the execution of the security operations by the device and thus produces a check value. This check value is then compared with the reference data so that the monitoring module can determine if the processing by the device was not altered.

### BRIEF DESCRIPTION OF THE INVENTION

According to one embodiment of the present invention, it is proposed a method to produce a software code protected against fault attack executed in a microprocessor, said code comprising at least a first and a second function, each of which comprising a set of instructions, characterized in that, the set instructions of the first and the second function is divided into subsets of instructions, the subsets of the first function being interleaved with the subsets of the second function resulting in a fourth function such that the execution instructions of the first and second function is carried out in an alternate manner.

Furthermore, it is proposed a microprocessor comprising an instruction execution module (ALU) designed to interpret an opcode with a set of operands and to produce a result, said instruction execution module being further designed to execute an enhanced opcode of the opcode associated with at least a first and a second set of operands, the execution of said enhanced opcode being operationally equivalent with the execution of the opcode with a first set of operands and the execution of the opcode with the second set of operands. "Operationally equivalent" means that the same result and/or action will be produced.

### BRIEF DESCRIPTION OF THE FIGURES

The invention will be better understood thanks to the attached figure showing the structure of a microprocessor.

### DETAILED DESCRIPTION

Two aspects of the disclosed invention are herewith described. One aspect is the preparation of the software code in a new way that will be resistant to a fault attack. A second aspect is the modification of a general purpose microprocessor to facilitate fault resistant processing. It is to be noted that the first part can be executed without the second part, the modification of the microprocessor adding another level of security to the method. Or alternatively, both aspects can be implemented together.

A secure software code is generally embedded into a secure processor. Today, standard processor architectures provide a possibility of sectioning which could be dedicated to the security operations with a dedicated memory.

A security function is part of the software code and is in charge, for example, of extracting and using a key, verifying the authorization or handling financial operation such as debiting a credit. This security function should be protected. One way to have this protection is to find a means to verify that the security function was not altered or bypassed. A first function is designed to calculate a reference value. This reference value is either generated from scratch during the first function, or a previously calculated reference value is read and updated during the first function.

The second function is the security function to be protected against the fault attack. Once the second function is executed, a third function is executed to test if the reference value is the expected value. The second function is then sandwiched between the first and third function and if the second function is executed whiteout entering by the expected entrance, i.e. through the first function, the reference value will be wrong during the verification by the third function.

This third function, also called reference value verification function, can be used many times during the execution of the whole software so that the proper execution of the second function is verified at a different time frame.

Once the first, second and third functions are designed as a set of instructions (i.e. opcodes and their operands), in one embodiment of the invention is to split the first and the second function into a plurality of subsets of opcodes and operands, a subset comprising one or a plurality of instructions. The method can be used for more than two functions and the fourth function can be the result of N functions interleaved together. It is to be noted that the software code can have sections resulting of the claimed method i.e. interleaved functions, and sections in which the functions are in their initial state.

According to one example, the first function is divided into 10 subsets and the second function is divided into 20 subsets. According to the invention, a fourth function is created by picking one subset from the first function and two subset of the second function. Any rule can be applied, e.g. every two subsets of the first function, three subsets of the second function are interleaved.

**Table 1 - First Function**

| F1 | Instructions | | Subset |
|---|---|---|---|
| | Opcode_F11 | Operand_11A, Operand_11B, Result_11C | S1 |
| | Opcode_F12 | Operand_12A, Operand_12B, Result_12C | S1 |
| | Opcode_F13 | Operand_13A, Operand_13B, Operand_13C | S2 |
| | Opcode_F14 | Operand_14A, | S3 |
| | Opcode_F15 | Operand_15A, Result_15B, Result_15C | S3 |
| | Opcode_F16 | Operand_16A, Operand_16B, Result_16C | S3 |
| | ... | | |
| | Opcode_F1n | Operand_1nA, Operand_1nB, Result_1nC | Sn |

**Table 2 - Second Function**

| F2 | Instructions | | Subset |
|---|---|---|---|
| | Opcode_F21 | Operand_21A, Operand_21B, Result_21C | S1 |
| | Opcode_F22 | Operand_22A, Operand_22B, Result_22C | S2 |
| | Opcode_F23 | Operand_23A, Operand_23B, Operand_23C | S2 |
| | Opcode_F24 | Operand_24A, | S2 |
| | Opcode_F25 | Operand_25A, Result_25B, Result_25C | S3 |
| | Opcode_F26 | Operand_26A, Operand_26B, Result_26C | S3 |
| | ... | | |
| | Opcode_F2m | Operand_2mA, Operand_2mB, Result_2mC | Sm |

**Table 3 - Fourth function**

| Function | Instructions | | Subset |
|---|---|---|---|
| F1 | Opcode_F11 | Operand_11A, Operand_11B, Result_11C | S1 |
| F1 | Opcode_F12 | Operand_12A, Operand_12B, Result_12C | S1 |
| F2 | Opcode_F21 | Operand_21A, Operand_21B, Result_21C | S1 |
| F1 | Opcode_F13 | Operand_13A, Operand_13B, Operand_13C | S2 |
| F2 | Opcode_F22 | Operand_22A, Operand_22B, Result_22C | S2 |
| F2 | Opcode_F23 | Operand_23A, Operand_23B, Operand_23C | S2 |
| F1 | Opcode_F14 | Operand_14A, | S3 |
| F1 | Opcode_F15 | Operand_15A, Result_15B, Result_15C | S3 |
| F1 | Opcode_F16 | Operand_6A, Operand_6B, Result_6C | S3 |
| F2 | Opcode_F25 | Operand_25A, Result_25B, Result_25C | S3 |
| F2 | Opcode_F26 | Operand_26A, Operand_26B, Result_26C | S2 |

An instruction is a set comprising an opcode, defining the type of operation to be executed, and at least one operand. The operand is the variable onto which the operation should be executed. For example, the operation INC defines an increment and the operand defines which register or memory location this increment applies.

An instruction can have several operands and could have one or more results. An operation such as ADD defines an addition between the first register or memory location identified by the first operand, and the second register or memory location defined by the second operand. The result defines where the result of the addition should be written.

The first function comprises several instructions divided into subsets S1 to Sn. A subset can contain one or several instructions.

The second function is divided in the same manner into several subsets. In the table above, the subsets are identified in the last column.

The fourth function is illustrated in the table above and is a mix of the first and the second function. The fourth function starts with the subset S1 of the first function, and then followed by the subset S1 of the second function. This is repeated until all subsets of the first and second function are present in the fourth function.

The fourth function, while executed, executes the first and the second function at the same time in an alternate manner. The advantage of this configuration is the difficulty to attack the first function without disturbing the second function. Since both functions are interleaved, they cannot be individually modified by a laser attack for example. According to one embodiment, the verification function is replicated many times (preferably 3 to 5 times) so that the alteration of the verification is very difficult.

According to one embodiment, the first function is inserted to the code and while executed produced a first reference value. This first function is duplicated and interleaved with the second function. While executed, the interleaved first function produces a second reference value. A third function is then added to the code which is the verification function. This function compares the first reference value with the second reference value. It can be then detected if the second function, interleaved with the first function, was altered during its execution since the second reference value will not be the same as the first reference value.

According to one embodiment of the invention, to enable a secure processing device, it is proposed to modify the Arithmetic Logic Unit (ALU) of the microprocessor to go a step ahead with the integration of the first and second function. This modified ALU is an example of an enhanced instruction execution module. A secure processing device could be a secure microprocessor and a secure system-on-chip.

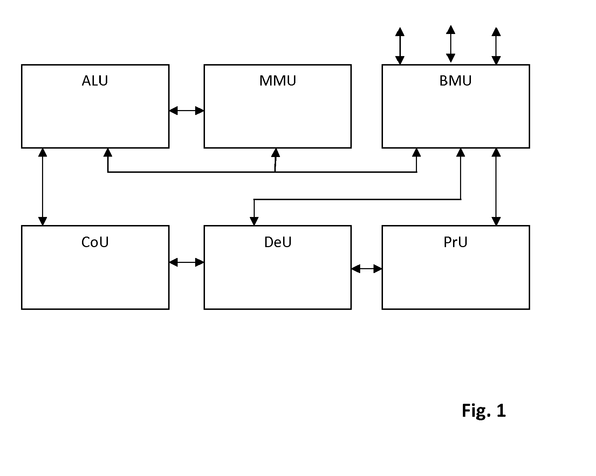

In the figure 1, a schematic view of a microprocessor is illustrated. The main blocks are the Arithmetic Logic Unit ALU in charge of the execution of the operation, the Memory management Unit MMU, the Bus management Unit BMU, the Prefect Unit PrU, the Decode Unit DeU and the Control Unit CoU.

To summarize, according to one example, the main sections of a microprocessor are:
- Arithmetic Logic Unit (ALU): execution module for an operation, executes all logic and arithmetic operations as specified by the instruction set.
- The Control Unit (CoU): contains the microcode that tells the ALU how to function.
- Decode Unit (DeU): translates instruction into control signals and microcode directions then queues them until requested by the Control Unit.
- Prefetch Unit (PrU): queues instruction to assure that the microprocessor is in continuous operation.
- Memory Management Unit (MMU): converts internal logic addresses into external memory addresses.
- Bus Management Unit (BMU): manages the flow of information between the microprocessor and data storage locations (main disk, CD-ROM, etc.) and peripherals (printer, monitor, etc.)

A system-on-chip, beside the microprocessor, may contain digital, analog, mixed-signal, and often radio-frequency functions-all on a single chip substrate.

According to another example of the invention, it is proposed to modify the ALU to execute enhanced instruction in which the same opcode (i.e. the operation to be executed) is distributed to two sets of operands. The first set refers to the first function and the second set refers to the second function. It is possible to swap the two sets of operands (and results if any).

Let's take the example in the table 3 the two first lines. The first and second lines refer to the first function and the third line refers to the second function. In case that the Opcode_F12 is the same as the Opcode_F21, the enhanced instruction will execute the opcode_F12 twice, once with the operands and result of the first function, the second time with the operands and result of the second function.

According to the example above in the table 1, the instruction of the first function is :
Opcode_F11, Operand_11A, Operand_11B, Result_11C

The instruction of the second function is :
Opcode_F21, Operand_21A, Operand_21B, Result_21C

Taking that into account: Opcode_F11 Opcode_F22, then the enhanced instruction will be :
EOpcode_1, Operand_11A, Operand_11B, Result_11C, Operand_21A, Operand_21B, Result_21C

The Eopcode_1 identifies the same operation as the Opcode_F11 (or Operand_F21) but has a different value in order to allow the ALU to identify a double operation.

The execution of the enhanced opcode of the opcode associated with at least a first and a second set of operands, is equivalent with the execution of the opcode with a first set of operands and the execution of the opcode with the second set of operands. In case that the enhanced opcode is associated with a third set of operands, the execution of said enhanced opcode being equivalent with the execution of the opcode with a first set of operands and the execution of the opcode with the second set of operands and the execution of the opcode with the third set of operands.

According to another embodiment, it is possible to alternate the operands. i.e. :
EOpcode_1, Operand_11A, Operand_21A, Operand_11B, Operand_21B, Result_11C, Result_21C

The operands of the first function are not grouped but spread in an alternate matter with the operands of the second function to form an enhanced set of operands. The instruction execution module is then able to extract the first set of operands (and result if any) of the enhanced set of operands while executing the opcode related to the first function, and extract the second set of operands (and result if any) while executing the opcode related to the second set of operands.

The enhanced instruction may be passed to the ALU so that it is not possible to execute only a part of the enhanced instruction, thus making the separation of the first and the second function very difficult. Or course, variations of the indicated examples (including in technically appropriate circumstance which a person skilled in the art will recognize, mixing and matching examples) can be made within the scope of this disclosure.

The present invention can be further extended to the execution of more than two instructions. In case that the enhanced opcode can be executed with three sets of operands, at least one set belongs to the first function and the other sets are from the second function, and vice versa. The set of operands should belong to both functions so that the alternate manner is still present.

## Claims

1. A method to produce a software code protected against fault attack executed in a microprocessor, said code comprising at least a first and a second function, each of which comprises a set of instructions, **characterized in that**, the set instructions of the first and the second function is divided into subsets of instructions, the subsets of the first function being interleaved with the subsets of the second function resulting in a fourth function such that the execution instructions of the first and second function is carried out in an alternate manner.

2. The method according to claim 1, wherein each instruction comprises an opcode and at least one operand, and wherein the set of opcode and operand of the first and the second function is divided into subsets of opcode and operand, and the subsets of the first function being interleaved with the subsets of the second function.

3. The method of claim 1 or 2, wherein said code further comprises a reference value verification function, and wherein the execution of the first function producing the reference value, the execution of the second function producing sensitive information.

4. The method of any of the claims claim 1 to 3, wherein the microprocessor comprises at least one enhanced instruction execution module related to a first operation, the fourth function comprising a first instruction carrying out the first operation and belonging to a subset of the first function, the fourth function comprising a second instruction carrying out the first operation belonging to a subset of the second function, the method comprising the step of replacing in the fourth function, the first instruction and the second instruction by the enhanced instruction.

5. The method of claim 4, wherein the enhanced instruction comprises at least an enhanced opcode with at least two set of operands related to said opcode, the first set of operand belonging to an instruction of the first function, the second set of operands belonging an instruction of the second function.

6. A secure processing device comprising an instruction execution module (ALU) designed to interpret an opcode with a set of operands and to produce a result, said instruction execution module being further designed to execute an enhanced opcode of the opcode associated with at least a first and a second set of operands, the execution of said enhanced opcode being operationally equivalent with the execution of the opcode with a first set of operands and the execution of the opcode with the second set of operands.

7. The secure processing device of claim 6, wherein the enhanced opcode is associated with a third set of operands, the execution of said enhanced opcode being operationally equivalent with the execution of the opcode with a first set of operands, the execution of the opcode with the second set of operands and the execution of the opcode with the third set of operands.

8. The secure processing device of claim 6, wherein the first set of operands is interleaved with the second set of operands to form an enhanced set of operands, the instruction execution module being further designed to extract the first set of operands from the enhanced set of operands while executing the opcode with a first set of operands, and to extract the second set of operands while executing the opcode of the second set of operands.
